# EUROPÄISCHE PATENTANMELDUNG

(11) **EP 0 869 059 A2**
(43) Veröffentlichungstag der Anmeldung: **07.10.1998**
(21) Anmeldenummer: 98103593.4
(22) Anmeldetag: 27.02.1998
(51) Int. Cl.: B64C 33/02, B64C 27/467

(54) **Drehflügelflugzeug mit Schlagflügelrotoren**

(30) Priorität: 02.04.1997 DE 19713591
(71) Anmelder: Mayer, Karl, 67157 Wachenheim (DE)
(72) Erfinder: Mayer, Karl, 67157 Wachenheim (DE)

(57) **Zusammenfassung**

Der Schlagflügelantrieb, angewandt für ein Drehflügelflugzeug ist bekannt. Dabei wird von einer Kurbel über ein Pleuel ein Schlagmechanismus angetrieben.In dieser Patentanmeldung werden besonders wirksame Schlagflügelrotoren beschrieben, die das Drehflügelflugzeug mit obigem Schlagmechanismus zum Fliegen bringen.

Mit Teilung des Flügels in den tragenden Rotorflügel und dem daran befestigten Schlagflügel, werden günstige aerodynamische Voraussetzungen geschaffen.Es entstehen zwei verschieden wirkende Rotorzonen.Die innere Zone mit dem Schlagflügel gibt dem gesamten Rotor sowohlAuftrieb, aber besonders Vortrieb. Die äußere, schnell laufende Zone des Rotors gibt immer Auftrieb und eine die Drehung stabilisierende Wirkung. Diese beiden Zonen können auch getrennt für verschiedene Drehflüglerarten und deren Steuerung benützt werden.

## Beschreibung

Der Schlagflügelantrieb für ein Drehflügelflugzeug ist bekannt. Dabei wird von einer Kurbel über ein Pleuel ein Schlagmechanismus angetrieben. In dieser Patentanmeldung werden besonders wirksame Schlagflügel beschrieben die ein Drehflügelflugzeug mit obigem Schlagmechanismus antreiben.

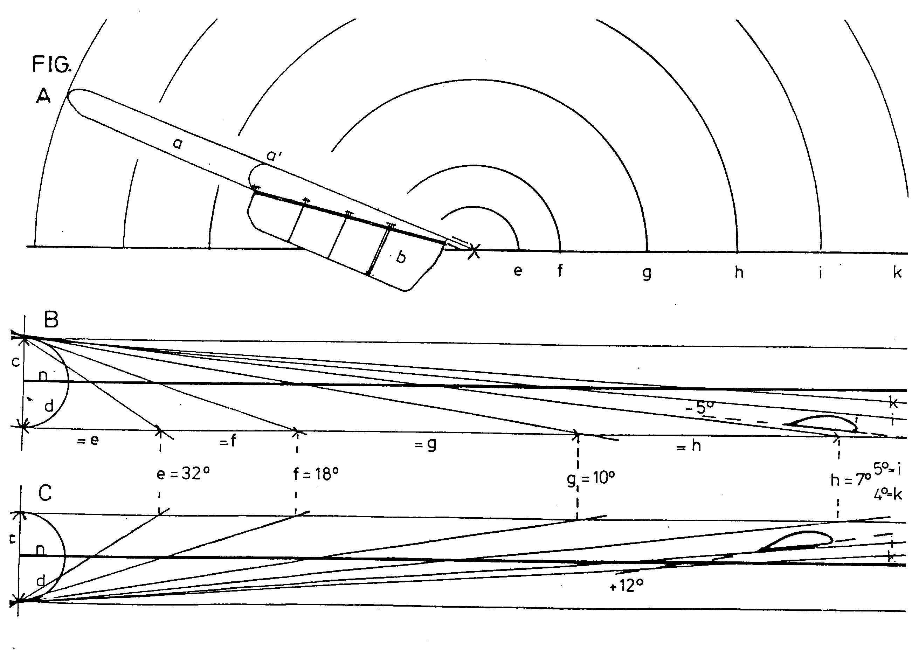

In Fig.1A ist ein Rotorflügel a mit einem Schlagflügel b bei einer halben Umdrehung mit den Halbkreislinien e,f,g,h, i und k gezeichnet. Mit der Teilung a'ist der Rotor für verschiedene Verwendungsarten gekennzeichnet. Die Zeichnung zeigt nur beispielhaft Flügelform und mögliche Drehgeschwindigkeit.

In Fig.1B ist die Schlaghöhe c, die sich aus dem oben genannten Schlagmechanismus ergebende, vergrößerte Kurbelbewegung als Kreis d gezeichnet. Geichzeitig ist geometrisch die Schlaghöhe c mit den angenommenen Halbkreislinien e,f,g,h,i und k der Fig 1A als Band bei der Abwärtsbewegung des Rotors projiziert. Mit der Mittellinie n ist dieses Band geteilt.

In der Fig.1C ist das projizierte Schlaghöhenband mit den Halbkreislinien und der Mittellinie, wie oben, nur bei der Aufwärtsbewegung gezeigt.

Der Winkel der Halbkreislinien im Schlaghöhenband fällt stark mit den Längen der Halbkreislinien.Es fällt e mit 32 Grad, f mit 18 Grad und g mit lo Grid. Im ersten Teil des Rotors, vom Drehpunkt ausgehend, mit den kurzen Halbkreislinien, fallen die Halbkreislinien von e mit 32 Grad auf g mit lo Grad. Dagegen fallen auf dem Außenteil des Rotors mit den langen Halbkreislinien von h mit 7 Grad auf k mit 4 Grad. Der erste Teil des Rotors vom Drehpunkt aus fällt 22 Grad. Der Außenteil zusammen fällt 3 Grad.

Bei gleicher Schlaghöhe werden die aerodynamischen Gegebenheiten mit länger werdendem Rotor stark verändert. Diese aufgezeigten Zusammenhänge veranlassen eine Flügelkonstruktion wie sie in Fig.1A gezeigt ist. An einem entsprechend langen und schmalen Rotorflügel a ist ein Schlagflügel b, nahe dem Drehpunkt, längs des Rotors, angebracht. Um bei den Auf-und Abbewegungen des Rotorflügels im Bereich der hohen Winkel, möglichst aerodynamisch günstig bewegt werden zu können, ist dieser Teil des Rotorflügels schmal gehalten. Der Schlagflügel b dagegen ist in diesem Bereich möglichst breit und so am schmalen Rotor befestigt,daß er bei vertikal geführtem Abwärtsschlag als Drehmoment den horizontal geführten Rotor in Bewegung setzt. Der außen laufende Rotorteil,(a'bis Ende a) der eine entsprechend größere Geschwindigkeit erreicht, bringt sowohl bei der Abwärtsbewegung als auch bei der Aufwärtsbewegung des Flügelrotors immer Auftrieb. Es befindet sich der außen laufende Rotorteil, bei leichter Torsion, in einem günstigen Auftriebsbereich.

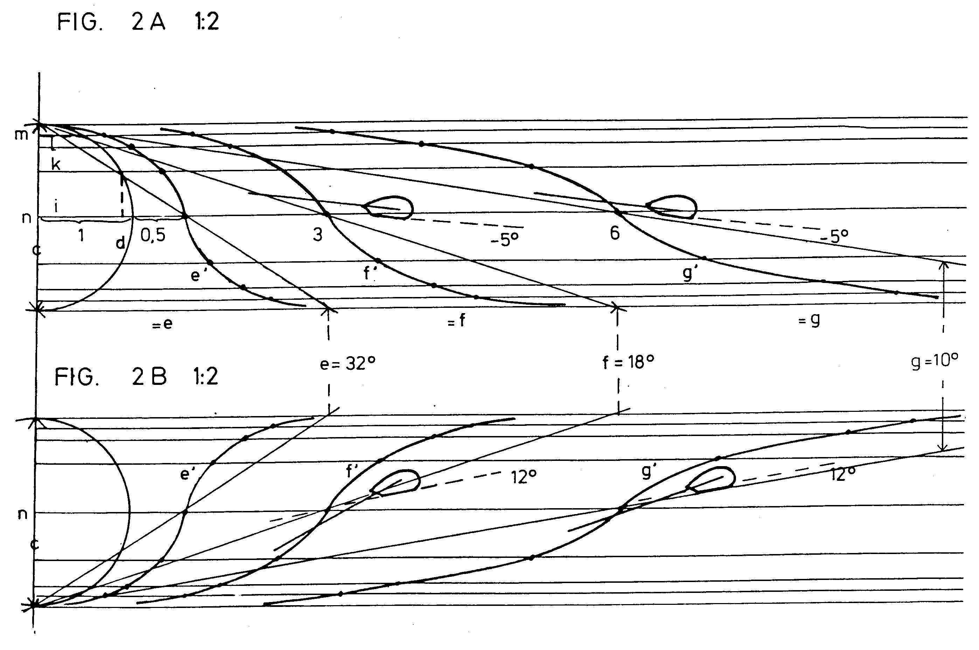

In Fig.2A und 2B ist ein Teil der Bandprojektionen (Fig.1B und 1C) im Verhältnis 1:2 gezeigt. Dabei ist die obere Hälfte des Bandes in die Bereiche i,k,l und m eingeteilt. Es zeigt der Bereich m nur ein Viertel der Schlaghöhe des Bereiches i bei gleichem Bogenweg. Auch entsteht am Schnittpunkt der Halbkreislinie e mit der Mittellinie n und der Schlaghöhenlinie c mit der Bogenlinie d ein Abstandsverhältnis 1:o,5. Werden auf die Bereichslinien i,k,l und m in diesem Abstandsverhältnis diese Werte projiziert, dann entstehen im Bereich der Halbkreislinien Kurvenlinien. Auf Fig 2A im Bereich der Linie e sind diese Entfernungen mit Punkten markiert und durch eine Linie e'verbunden. Entsprechend ist dies auch mit den Linien f mit der dreifachen und g mit der 6 fachen Verhältniszahl geschehen. Wie beschrieben, wird auch mit der unteren Bandhälfte Fig 2A und dem ganzen Band der Fig 2B verfahren.

Es ergeben sich Kurvenlinien der ganzen Schlaghöhe. Diese Kurvenlinien stellen den wirklichen Schlaggeschwindigkeitsablauf (der Rotoren) der eingezeichneten Halbkreislinien dar. Trotz gleichmäßiger Kurbeldrehung entsteht im Bereich i,k,l eine hohe Schlaggeschwindigkeit. Diese Schlaggeschwindigkeit flacht im Bereich m bis zu Null ab.

In Fig 2A ist der abwärtsgeführte Rotor mit Schlagflügel im Profil im Bereich der Mittellinie n und in Fig.2B der aufwärtsgeführte Rotor mit Schlagflügel im Profil im Bereich der Mittellinie n gezeigt. Da der abwärtsgeführte Rotor gleichzeitig die Autorotation sicher stellen muß, ist der Anstellwinkel des Rotors in Bezug zum Drehpunkt negativ. Der Rotor ist in der Seitenrichtung drehbar und den Erfordernissen entsprechend einstellbar. Ermuß pendeln. Hier als Beispiel ist der Rotor in der ganzen Länge mit 5 Grad negativ eingeteilt. Um möglichst wirksam zu sein, ist dagegen der Schlagflügel b nach der Halbkreislinie und unter Berücksichtigung der ermittelten Kurvenlinie, der Kurbelbewegung entsprechend, einzustellen.

Wegen den anders gearteten Erfordernissen sowohl des Rotors und des Schlagflügels bei der Aufwärtsbewegung des Schlagflügels ist das Profil in der Fig.2B mit einer positiven Einstellung versehen.Hier im Beispiel 6 Grad als Steigung der Halbkreislinien in der Außenzone des Rotors,plus 6 Grad als Anstellwinkel des Profils, ergibt 12 Grad.Um keinen aerodynamischen Widerstand bei der Aufwärtsbewegung des Schlagflügels zu erzeugen stellt sich der Schlagflügel selbsttätig am Rotorteil bei der unteren Schlagumkehr, in Verbindung mit der positiven Rotorstellung auf den geringsten aerodynamischen Widerstand ein.Es muß nicht nur der Rotor, sondern auch der Schlagflügel pendeln. Dabei ist zu beachten, daß der Schlagflügel, auf Grund seiner Trägheit und Größe ausschwingt und dem Rotorsystem, bei der Schlagumkehr im unteren Totpunkt, einen wichtigen Drehimpuls gibt. Bei geteiltem Schlagflügel kann ein Drehimpuls, besonders im e der Halbkreislinie, auch bei der Aufwärtsbewegung des Rotors wirken.

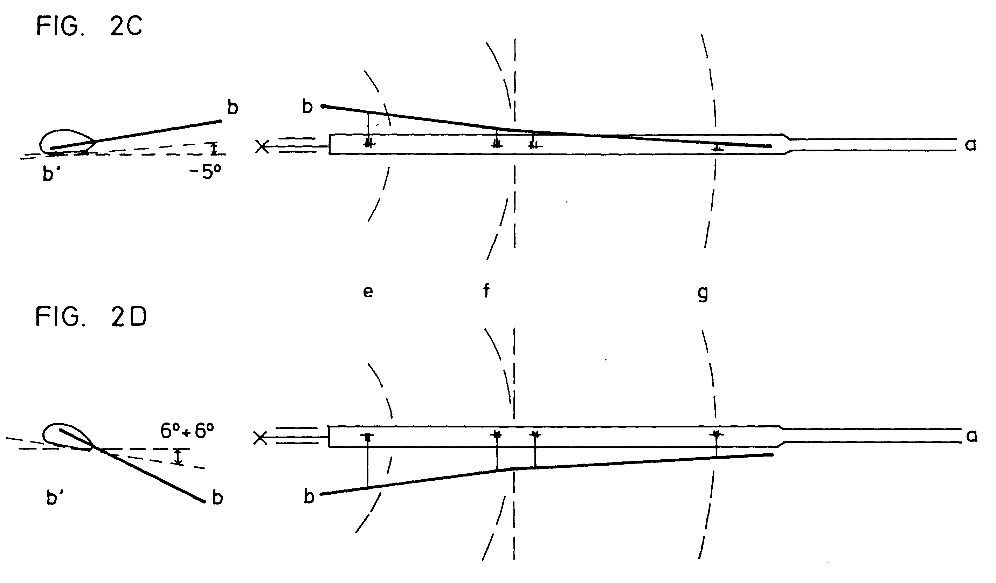

In der Fig. 2C (Maßstab 1:2 ) ist der Rotor mit Schlagflügel (aus Fig.1A) von der Schlagflügelrückseite gezeigt. Die schräge Linie b (Fig.2C) zeigt das hintere Ende des Schlagflügels b im oberen Totpunkt der Pleuelbewegung und die Stellung bei der Autorotation. Der Schnitt b'zeigt mit dem Rotorprofil und dem Hilfsflügel den Durchgang der Halbkreislinie e.
In der Fig.2D ist der Rotor mit Schlagflügel im unteren Totpunkt von hinten gezeigt. Der Schlagflügel ist dabei, vom Drehpunkt beginnend, mit großem Ausschlag bei der Halbkreislinie e, bis zum kleinen Ausschlag bei der Halbkreislinie g, auf die starken Winkeländerungen nach Fig.2B eingestellt.

Obwohl der gesamte Rotor mit der gleichen Schlaghöhe bewegt wird, entstehen durch die Drehung des Rotors um die eigene Achse am Rotor zwei unterschiedliche Zonen. Die innere Zone mit dem Schlagflügel und der Rotorlänge bis a'(Fig.1A) kann als Antrieb für Drehflügler, wie diese bekannt sind, verwendet werden. Direkt auf den Steuerrotor aufgesetzt, ohne Abstützung auf der Flugzeugzelle, gibt dieser Antrieb seine ganze Leistung vertikal an den tragenden Rotor ab. Dagegen wird die ganze Rotorlänge (Fig.1A,a) mit Schlagflügel b bei Drehflüglern mit leichtem Motor und bei Muskelkraftantrieb verwendet.

Zwischen dem durch Muskelkraft oder durch Motorkraft angetriebenen Drehflügler muß im Leistungsverhalten unterschieden werden. Beim Motorkraftdrehflügler ist die Kraftübertragung vom Motor auf den Schlagmechanismus mechanisch auf kurzem Wege möglich. Beim Muskelkraftdrehflügler bedingen die Tretlager-Kettenverbindungen eine andere Angleichung an den Schlagmechanismus wie beim Motorantrieb. Bei beiden Systemen muß noch im Leistungsverhältnis unterschieden werden. Beim Muskelantrieb wirkt die eingesetzte Kraft vertikal voll auf den horizontal drehenden Rotor, so daß das dabei eingesetzte Körpergewicht in Verbindung von evtl. gegebenen Hangwind oder Thermik zum Fliegen ausreicht.

Beim Motorantrieb muß das Gewicht des Piloten,einschließlich dem Motorgewicht mit Zubehör und dem dadurch bedingt höheren Herstellungsgewicht des Fluggerätes dem Fluggewicht hinzu gerechnet werden.

Besonders beim Langsamflug dreht, je nach Qualität der Rotorlagerung, der ganze Drehflügler langsam in die gleiche Richtung wie der Rotor. Durch Zwischenschalten eines abbremsbaren Rades zwischen drehenden Rotor und Drehflüglerrahmen, kann diese Bremswirkung der Rotorlagerung zur Steuerung des Drehflüglers verwendet werden. Darüber hinaus wird durch Gewichtsverlagerung des Piloten der Drehflügler im Gleichgewicht gehalten.

Die Zeichnungen veranschaulichen den Erfindungsgegenstand in beispielweiser Ausführung. Es zeigt:
- Fig. 1 A: den Flügel als Rotor mit Schlagflügel bei einer halben Umdrehung mit Bereichslinien.
- 1 B: Schlaghöhenband mit Bereichslinien bei Abwärtsbewegung.
- 1 C: Schlaghöhenband mit Bereichslinien bei Aufwärtsbewegung.
- Fig.2 A: Schlaghöhenband, Maßstab 1 : 2 bei Abwärtsbewegung.
- 2 B: Schlaghöhenband, Maßstab 1 : 2 bei Aufwärtsbewegung
- 2 C: Rotor mit Schlagflügel,Maßstab 1 : 2 von der Rückseite, oberer Totpunkt.
- 2 D: Rotor mit Schlagflügel,Maßstab 1 : 2 von der Rückseite, unterer Totpunkt.

## Patentansprüche

1. Ein Rotor mit Schlagflügel für Drehflügelflugzeuge dadurch gekennzeichnet
a) daß der Flügel als Rotor (Fig.1A) im vorderen Teil der Flügelnase, in der Längsachse drehbar, angebracht ist und der Rotor aus zwei, vier oder mehr Flügel bestehen kann.
b) daß der Flügel aus dem Rotorflügel(Fig.1A,a,)und einem Schlagflügel (Fig.1A,b)besteht, der auch aus mehreren Teilen bestehen kann.
c) Dass diese Schlagflügel an dem schmalen Rotorflügelteil so angebracht sind, daß sie nächst der Rotormitte (Fig.1 A) wirken und mit dem Rotorflügel und allein pendeln.
d) daß die Schlagflügel bei der oberen Schlagumkehr und Abwärtsbewegung mit dem Rotorflügel zu einer Fläche sich schließen und bei der unteren Schlagumkehr und der Aufwärtsbewegung, bei beiden Flügelteilen sich der Anstellwinkel stark ändert (Fg.2C und 2D).
e) daß wie in Fig.1A,B und C gezeigt, auf dem Schlaghöhenband B und C die angenommenen Halbkreislinien e,f,g,h,i und k sich sehr stark ändern und bei einer Schlaghöhe, als Beispiel 5o cm, von e mit 32 Grad auf g mit lo Grad und im Außenteil des Rotors von h mit 7 Grad auf K mit 4 Grad fallen.
f) daß diese Unterschiede, getrennt für verschiedene Drehflüglerarten, verwendet werden können.

2. Ein Rotor mit Schlagflügel für Drehflügelflugzeuge nach Anspruch 1 dadurch gekennzeichnet
g) daß durch den vertikalen Antrieb der horizontal drehenden Rotoren mit Schlagflügel, mittels Kurbel und Pleuel im oberen und unteren Umkehrpunkt die Schlaggeschwindigkeit Null ist und wie in Fig.2AB und Fig.2CD gezeigt,je nach Schlaghöhe, durch die Schlaggeschwindigkeitsänderungen in den Bereichen i,k,l und m, je nach Abstand der Flügelprofile von der Rotormitte, verschiedene aerodynamische Möglichkeiten entstehen und diese Möglichkeiten zu verschieden wirksamen Flügelarten genutzt werden können.
h) daß bei der unteren Schlagumkehr, durch die Anstellwinkeländerung der Schlagflügel und durch deren Breite und Trägheit dem Rotor ein Drehimpuls gegeben wird, der den Nullpunkt überwindet und dabei ein zusätzlicher Auftriebsimpuls gegeben wird.
i) daß bei den Merkmalen g,h, die Anstellwinkel im Außenbereich des Rotors sich so ändern, daß die Flügelprofile sowohl bei der Auf-und Abwärtsbewegung als auch bei der Pendelung von minus zu plus, immer im Auftriebsbereich befinden, ohne daß die Schlagbewegung und der Antriebsimpuls beeinflußt werden.
k) daß bei den Merkmalen g,h,i der bei Thermik, Hangwind oder sonstigem Auftrieb beeinflußte Rotor auch durch hohe Schlagzahlen angetrieben werden kann und dabei der entstandene Drehimpuls auf den Rotor wirkt.
l) daß bei den Merkmalen g,h,i,k nicht nur bei der oberen Schlagumkehr die Rotorflügel mit Schlagflügel negativ zur Rotorachse eingestellt sind, sondern immer bei Stillstand der vertikalen Schlagbewegung beide Rotorflügel (oder mehr) mit Schlagflügel sich selbsttätig negativ einstellen und so die Autorotation immer sicher gestellt ist.

3. Ein Rotor mit Schlagflügel nach Anspruch 1 und 2 dadurch gekennzeichnet
m) daß mit Ausnutzung der Bremswirkung der Rotorlagerung, durch Zwischenschalten eines abbremsbaren Rades, zwischen Rotor und Drehflüglerrahmen, der Drehflügler gesteuert werden kann.
n) daß durch Gewichtsverlagerung des Piloten der Drehflügler zusätzlich gesteuert und im Gleichgewicht gehalten werden kann.
